# EUROPÄISCHE PATENTANMELDUNG

(11) **EP 0 987 485 A2**
(43) Veröffentlichungstag der Anmeldung: **22.03.2000**
(21) Anmeldenummer: 99113817.3
(22) Anmeldetag: 15.07.1999
(51) Int. Cl.: F16L 55/18, B65H 81/08

(54) **Vorrichtung zum Bewickeln eines Rohrstranges mit Korrosionsschutzband**

(30) Priorität: 17.09.1998 DE 19842531
(71) Anmelder: DENSO-Holding GmbH & Co., 51371 Leverkusen (DE)
(72) Erfinder: Konkol, Günther, 51377 Leverkusen (DE)
(74) Vertreter: Langmaack, Jürgen, Dipl.-Ing.

(57) **Zusammenfassung**

Die Erfindung betrifft eine Vorrichtung zum Umwickeln eines Rohres (3), insbesondere eines Rohrstranges, mit Korrosionsschutzband (19), die ein Fahrwerk (1) aufweist, das mit antreibbaren Laufrollen (2, 4) versehen und auf dem Rohr (3) in Längsrichtung verfahrbar ist, und an dem ein das zu bewickelnde Rohr (3) umfassender Drehkranz (13) antreibbar gelagert ist, der mit wenigstens einer, mit einer Bandspule versehenen Abspulvorrichtung (18) verbunden ist.

## Beschreibung

Zum Schutz gegen Korrosion werden Rohrleitungen, insbesondere Rohrleitungen aus metallischen Werkstoffen, mit einer Umkleidung versehen. Soweit diese Umkleidung nicht werkseitig aufgebracht werden kann, was insbesondere bei Großrohren der Fall ist, oder aber zur Sanierung von beschädigten Schutzumhüllungen, werden die Oberflächen mit Korrosionsschutzbändern, vorzugsweise mit kaltverarbeitbaren Kunststoffbändern wendelförmig und mit Überlappung umwickelt. Hierzu werden beispielsweise sogenannte Mehrschichtbänder verwendet, wie etwa Polyethylenfolien mit einem beidseitigen Belag aus Butyl-Kautschukmischungen, so daß bei einer überlappenden Bewicklung die Bänder im Überlappungsbereich dicht zusammenwachsen und auf diese Weise die korrosionsgefährdeten Rohroberflächen gegen korrosive Medien, wie Sauerstoff, Wasser- und/oder Bodenelektrolyte abdichten. Zur Gewährleistung eines dauerhaften Korrosionsschutzes ist es jedoch erforderlich, daß die Bänder mit konstanter Kraft von einer Vorratsrolle abgezogen, d. h. das Rohr mit konstantem Zug umwickelt wird, wobei ferner für eine möglichst gleichmäßige und faltenfreie Überlappung auf dem Rohrumfang Sorge zu tragen ist.

Bei kleineren Rohdurchmessern mit kurzen Rohrlängen haben sich Handgeräte auch im robusten Einsatz innerhalb eines Rohrgrabens bewährt, wie sie beispielsweise aus DE-PS 23 60 700 bekannt sind. Derartige Handgeräte sind jedoch bei Großrohren, die eine Person bei der Handhabung eines derartigen Gerätes nicht mehr umgreifen kann, nicht mehr einsetzbar.

Für Großrohre, insbesondere für den Pipelinebau sind Vorrichtungen der unterschiedlichsten Art bekannt, die in ihrem Grundaufbau aus einem ringförmigen Tragrahmen bestehen, der das zu bewickelnde Rohr umschließt und der sich mit Hilfe von Stützrollen, die auf der Rohroberfläche umlaufend abrollen, auf dem zu bewickelnden Rohr drehbar gehalten ist. An diesem Tragrahmen sind ein oder mehrere Abwickelvorrichtungen für die Korrosionsschutzbänder angeordnet, die in ähnlicher Weise arbeiten, wie das vorstehend erwähnte Handgerät. Derartige Geräte werden insbesondere beim Neubau von Pipelines eingesetzt, wenn der zu verlegende Rohrstrang fortlaufend mit einer Korrosionsschutzumhüllung bewickelt werden soll, aber auch, wenn jeweils nur die Schweißverbindungen zwischen zwei, mit einer werksseitigen Umhüllung versehenen Rohrstücken mit einer Korrosionsschutzumhüllung umwickelt werden sollen.

Aus WO 92/14090 ist eine Vorrichtung zum Aufbringen von Korrosionsschutzbändern auf Rohre mit großem Durchmesser bekannt, bei der ein das zu bewickelnde Rohr klauenartig umgreifender Geräteträger mit Wickelvorrichtung für das zu umwickelnde Schutzband vorgesehen ist, der mit einem endlosen, den Rohrumfang umschlingenden Antriebsband versehen ist, das durch einen mit dem Geräteträger verbundenen Antrieb zusammen mit der Abwickelvorrichtung um das Rohr herumgeführt wird. Ein derartiges Gerät ist insbesondere für das Umwickeln der Schweißstellen von zwei aneinandergrenzenden Rohrschüssen bei Rohren mit geringerem Durchmesser einsetzbar, da es schnell von Schweißstelle zu Schweißstelle versetzt werden kann.

Der Erfindung liegt die Aufgabe zugrunde, eine Vorrichtung zu schaffen, wie sie auch zum Bewickeln vollständiger Rohrstränge, insbesondere aus Rohren mit Durchmessern von über 600 mm erforderlich ist, die in Aufbau und Handhabung vereinfacht ist.

Diese Aufgabe wird gelöst mit einer Vorrichtung zum Umwickeln eines Rohres, insbesondere eines Rohrstranges mit Korrosionsschutzband, die ein Fahrwerk aufweist, das mit antreibbaren Laufrollen versehen ist und auf dem Rohr in Längsrichtung verfahrbar ist und an dem ein das zu bewickelnde Rohr umfassenden Drehkranz antreibbar gelagert ist, der mit wenigstens einer mit einer Bandspule versehenen Abspulvorrichtung verbunden ist. Eine derartige Vorrichtung hat den Vorteil, daß sie auf einem in einem Rohrgraben zu verlegenden fertig geschweißten Rohrstrang in Längsrichtung verfahren werden kann, wobei lediglich in der Breite und in der Tiefe ein genügender Freiraum vorzusehen ist. Da der mit dem Fahrwerk zu verbindende Antrieb auf dem sich nur in Längsrichtung bewegenden Fahrwerk montiert ist und lediglich die um den Rohrstrang umlaufende Abspulvorrichtungen bei der Bemessung der Breite des Rohrgrabens zu berücksichtigen sind, ergibt sich gegenüber den vorbekannten Einrichtungen eine deutliche Reduzierung der Rohrgrabenbreite. Für das Bedienungspersonal bleibt genügend Raum, da die Vorrichtung nur in ihrer Längsbewegung zu führen ist. Die zu bewickelnde Rohroberfläche wird zuvor mit einem Primer versehen. Daher wird zweckmäßigerweise so gearbeitet, daß die Laufrollen des Fahrwerks bereits auf der bewickelten Rohroberfläche abrollen, wobei durch die nur in Längsrichtung erfolgende Bewegung des Fahrwerks die geringstmögliche Beanspruchung des frisch aufgewickelten Korrosionsschutzbandes erfolgt. Besonders zweckmäßig ist es hierbei, daß ein Teil der Laufrollen am Fahrwerk so angeordnet ist, daß dieses auf den Scheitelbereich des Rohres abgestützt wird. Zur Fixierung ist es ferner zweckmäßig, wenn weitere Laufrollen seitlich am Rohr anliegend am Fahrwerk angeordnet sind. Bei der Anordnung von zwei Abspulvorrichtungen läßt sich in einem Arbeitsgang eine zweilagige Bewicklung aufbringen.

In einer vorteilhaften Ausgestaltung der Erfindung ist vorgesehen, daß das Fahrwerk mit einem Antriebsmotor versehen ist, über den die Laufrollen des Fahrwerks und der Drehkranz in einem vorgebbaren Verhältnis von Fahrgeschwindigkeit des Fahrwerks zur Drehzahl des Drehkranzes antreibbar sind. Hierbei ist es zweckmäßig, wenn die dem Scheitelbereich des zu bewickelnden Rohres zugeordneten Laufrollen mit dem Antriebsmotor in Wirkverbindung stehen. Durch die Vorgabe des Verhältnisses von Fahrgeschwindigkeit und Drehzahl des Drehkranzes läßt sich eine Bewicklung mit Korrosionsschutzband mit einer genau definierten Steigung und in einer vorgegebenen Überlappungsbreite aufbringen.

In weiterer Ausgestaltung der Erfindung ist vorgesehen, daß die dem Scheitelbereich des zu bewickelnden Rohres zugeordneten Laufrollen im Abstand zum Fahrwerk höhenverstellbar mit dem Fahrwerk verbunden sind. Durch diese Ausgestaltung ist die Möglichkeit gegeben, bei einem Drehkranz mit vorgegebenem Durchmesser durch eine Höhenverstellung der im Scheitelbereich auf dem zu bewickelnden Rohr aufliegenden Rollen die Drehachse des Drehkranzes auf die Rohrlängsachse einzustellen. Damit ist aber auch die Möglichkeit gegeben, vorgegebene Durchmesserbereiche mit unterschiedlichen Drehkränzen mit entsprechenden Durchmesserabstufungen abzudecken. So hat es sich als zweckmäßig herausgestellt, Durchmesserabstufungen zwischen 300 und 500 mm, 600 und 800 mm sowie 800 und 1.000 mm vorzusehen, wobei für jede Durchmesserabstufung ein entsprechender Drehkranz vorzuhalten ist.

In einer zweckmäßigen Ausgestaltung der Erfindung ist vorgesehen, daß der Drehkranz teilbar ausgebildet ist. Diese Ausgestaltung bietet die Möglichkeit, daß nach dem Entfernen eines Teilstücks des Drehkranzes entweder die Vorrichtung insgesamt auf einen bereits vorliegenden Rohrstrang aufgesetzt werden kann. Nach dem Aufsetzen der Vorrichtung auf den Rohrstrang wird das betreffende Teilstück des Drehkranzes wieder eingesetzt und fest verbunden.

Um einen möglichst großen Freiraum innerhalb des Drehkranzes zu erhalten, ist es zweckmäßig, wenn in einer Ausgestaltung der Erfindung der Drehkranz über Stützrollen am Fahrwerk drehbar gelagert ist. Diese Anordnung bietet auch die Möglichkeit, den Drehkranz auswechselbar mit dem Fahrwerk zu verbinden, wobei durch eine entsprechende Abstandsänderung der Stützrollen zueinander Drehkränze mit unterschiedlichen Durchmessern eingesetzt werden können.

In besonders zweckmäßiger Ausgestaltung der Erfindung ist vorgesehen, daß der Drehkranz als Zahnkranz ausgebildet ist und daß die Verzahnung des Drehkranzes über ein Antriebsritzel mit dem Antriebsmotor in Verbindung steht. Bei einer entsprechend groben Verzahnung ist für die Vorrichtung trotz des Umstandes, daß sie in einem offenen Rohrgraben eingesetzt und betätigt wird, keine Gefahr von Störungen oder Beschädigungen gegeben, wenn Schmutzteile in die Verzahnung gelangen. Die Verzahnung kann hierbei in der einfachsten Form außenliegend am Drehkranz angeordnet sein. Es ist aber auch möglich, den Außenumfang des Drehkranzes glattflächig vorzusehen und den Innenumfang des Drehkranzes in axialem Abstand nebeneinander sowohl die Laufflächen für die Stützrollen als auch die Verzahnung vorzusehen.

In weiterer Ausgestaltung der Erfindung ist vorgesehen, daß das Fahrwerk mit einer seitlich abstehenden Führdeichsel versehen ist, an der die Betätigungseinrichtungen zur Steuerung der Fahrfunktionen angeordnet sind. Durch eine derartige Führdeichsel ist die Möglichkeit gegeben, daß die Bedienungsperson seitlich neben der Vorrichtung unter Beobachtung des ablaufenden Wickelvorganges die Vorrichtung im Rohrgraben führen kann. Bei Rohrsträngen, die mit einer Werksumhüllung versehen sind und bei denen lediglich die Schweißstellen zwischen zwei Rohrschüssen zu umwickeln sind, kann dann mittels der Führdeichsel die Vorrichtung von einer Bewicklungsstelle zur anderen Bewicklungsstelle entweder von Hand verschoben oder aber auch über den Fahrantrieb verfahren werden, wobei dann der Antrieb für den Drehkranz auszukuppeln ist.

In zweckmäßiger Ausgestaltung ist am Fahrwerk an dem dem Drehkranz abgekehrten Ende eine Gegengewicht angeordnet. Durch dieses Gegengewicht wird das verhältnismäßig hohe Gewicht des Drehkranzes mit der angesetzten Spulvorrichtung, sowie das auftretende Drehmoment beim Umwickeln des Rohres ausgeglichen.

Die Erfindung wird anhand schematischer Zeichnungen eines Ausführungsbeispiels näher erläutert. Es zeigen:
- Fig. 1: eine Vorrichtung in Seitenansicht,
- Fig. 2: eine Stirnansicht,
- Fig. 3: eine Aufsicht auf eine Abspulvorrichtung.

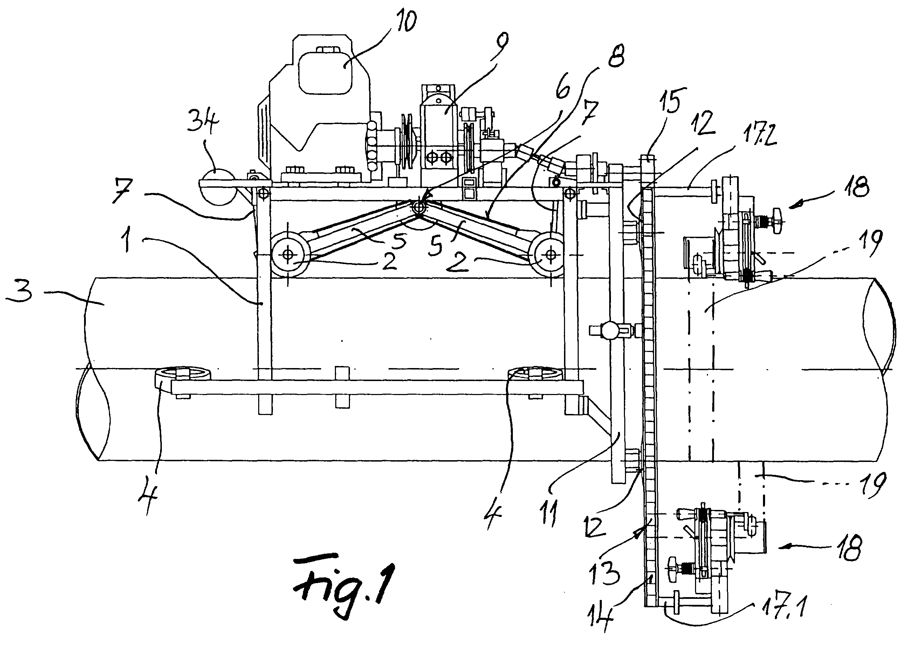

Wie aus Fig. 1 ersichtlich, besteht die dargestellte Ausführungsform im wesentlichen auf einem auf Rohrelementen aufgebauten Fahrwerk 1, das mit Laufrollen 2 versehen ist, die das Fahrwerk auf dem Scheitelbereich eines zu bewickelnden Rohrstranges 3 abstützen. Ferner sind noch weitere Laufrollen 4 am Fahrwerk 1 so angeordnet, daß sie seitlich am Rohrstrang 3 anliegen. Die Anordnung ist hierbei so getroffen, daß diese Laufrollen 4 mit Bezug auf die im Scheitelbereich angeordneten Laufrollen 2 etwas unterhalb der Mittelebene des Rohrstranges 3 angeordnet sind.

Die im Scheitelbereich angeordneten Laufrollen 2 sind jeweils über Lenkerarme 5 am Fahrwerk 1 mit einer zentralen Achse 6 angelenkt, so daß über entsprechende Stellmittel 7 die Höhenlage des Fahrwerks 1 gegenüber der Abrollebene für die Laufrollen 2 einstellbar ist.

Im Bereich der zentralen Achse 6 ist zugleich auch eine Welle mit hier nicht näher dargestellten Antriebsritzeln gelagert, über die jeweils zu den Laufrollen 2 Rollenketten oder Zahnriemen 8 als Antriebsmittel geführt sind. Die Ritzel stehen über ein Getriebe 9 mit einem Antriebsmotor 10, beispielsweise einem kleinen Kolbenmotor in Verbindung.

An einem Ende des Fahrwerks 1 ist ein das zu bewickelnde Rohr von oben U-förmig umgreifender Halterahmen 11 vorgesehen, der mit mehreren Stützrollen 12 verbunden ist, deren Drehebene in einer Querschnittsebene des zu bewickelnden Rohrstranges 3 ausgrichtet ist. Auf diese Stützrollen 12 ist ein Drehkranz 13, hier beispielsweise ein mit einer Außenverzahnung 14 versehener Drehkranz axial fixiert aufgesetzt. Die Verzahnung 14 des Drehkranzes 13 steht mit einem Antriebsritzel 15 in Wirkverbindung, das seinerseits mit dem Antriebsmotor 10 über eine betätigbare Trenbnkupplung verbunden ist.

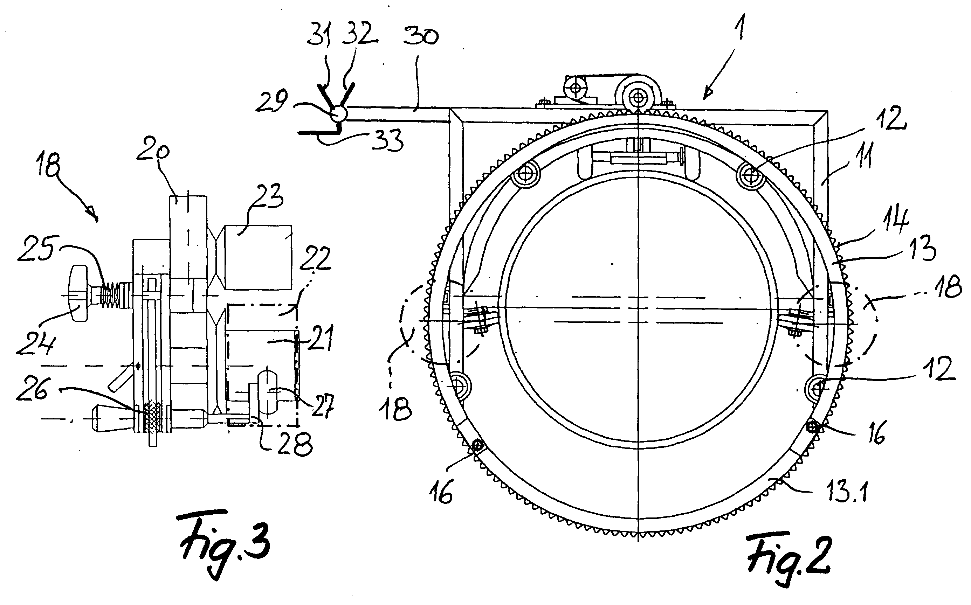

Wie aus der Stirnansicht gem. Fig. 2 ersichtlich, ist der Drehkranz 13 teilbar ausgebildet und zwar zweckmäßigerweise in ungleich große Teilstücke. Das kleinere Teilstück 13.1 kann nach dem Lösen entsprechender Verschlüsse 16 abgenommen werden, so daß die Vorrichtung insgesamt von oben her auf den zu bewickelnden Rohrstrang aufgesetzt werden kann. Anschließend wird das Teilstück 13.1 wieder eingesetzt und über die Verschlüsse 16 fest mit dem größeren Teilstück des Drehkranzes 13 verbunden.

Auf dem Drehkranz 13 sind stirnseitig zwei in Axialrichtung vorspringende Tragarme 17.1 und 17.2 mit vorzugsweise unterschiedlicher Länge angeordnet. An diesen Tragarmen 17 ist jeweils eine mit einer Bandspule zu bestückende Abspulvorrichtung 18 vorzugsweise lösbar befestigt. In Fig. 2 sind die Abspulvorrichtungen nur schematisch und gegenüber der Darstellung gem. Fig. 1 um 90° versetzt angeordnet dargestellt. Der prinzipielle Aufbau einer derartigen Abspuleinrichtung 18 wird anhand von Fig. 3 noch näher erläutert.

Die beiden Abspulvorrichtung 18 sind nun am Drehkranz 13 so befestigt, daß die auf die Rohroberfläche des Rohrstranges 3 aufzubringende, schematisch angedeuteten Korrosionsschutzbänder 19 bei einer Betätigung des Drehkranzes 13 in zwei Lagen mit jeweils einer vorgegebenen Überlappung auf die Rohroberfläche aufgebracht werden. Bei der Größe der Rohrdurchmesser der mit dieser Vorrichtung zu bewickelnden Rohre ist es nicht unbedingt erforderlich, die Drehachsen der Bandspule gegenüber der Rohrachse zu verschwenken. Die elastisch-plastische Verformbarkeit der aufzubringenden Korrosionsschutzbänder reicht hierbei aus, je Korrosionschutzband eine glatte und verzugsfreie Überlappung der Bewicklung zwischen 25 und 75 mm zu bewirken. Die Breite der Überlappung wird über eine entsprechende Einstellung des Verhältnisses zwischen Fahrgeschwindigkeit des Fahrwerks in Rohrlängsrichtung und der Umlaufgeschwindigkeit des Drehkranzes mit den Abspulvorrichtungen um das Rohr bestimmt.

Wie aus der schematischen Aufsicht gem. Fig. 3 zu erkennen ist, besteht die Abspulvorrichtung 18 im wesentlichen aus einem Träger 20, der mit einem Wickelkern 21 mit aufgesetzter Bandspule 22 versehen ist. Dem Wickelkern 21 ist eine Aufwickelrolle 23 zugeordnet, über die beim Abziehen des Korrosionsschutzbandes die zwischen den einzelnen Lagen des Wickels der Bandspule mitaufgewickelte Trennfolie beim Abziehen des Korrosionsschutzbandes von diesem getrennt und geordnet aufgewickelt wird. Der Antrieb der Aufwickelrolle 23 erfolgt über einen hier nicht näher dargestellten Riementrieb mit zwischengeschalteter Rutschkupplung. Durch eine über einen Handgriff 24 durch ein Tellerfederpaket 25 in ihrer Bremskraft einstellbare Reibungsbremse 26 wird der Anfangswert der Zugkraft für das aufzuwickelnde Band eingestellt. Die Reibkraft wird dann über einen mit einer Kontaktrolle 27 versehenen Arm 28 proportional zur Verminderung des Wickeldurchmessers verringert, so daß sich im wesentlichen ein konstanter Wickelzug ergibt.

Wie aus Fig. 2 ferner ersichtlich, ist am Fahrwerk 1 eine seitlich herausragende, mit einem Handgriff 29 versehene Führdeichsel 30 angeordnet. Am Handgriff 29 sind (hier schematisch dargestellt) je ein Kupplungshebel 31 für den Fahrantrieb und ein Kupplungshebel 32 für den Antrieb des Drehkranzes 13 sowie ein Gashebel 33 zur Einstellung der Fahrgeschwindigkeit vorgesehen.

Zum Ausgleich des durch den Drehkranz 13 mit den aufgesetzten Abspuleinrichtung 18 endseitig auf das Fahrwerk 1 wirkenden Gewichtes ist zum einen der Antriebsmotor 10 entsprechend am anderen Ende des Fahrwerks 1 angeordnet. Durch ein zusätzliches, auswechselbares Gegengewicht 34, das in seiner Größe jeweils auf die unterschiedlichen Größengewichte unterschiedlicher Drehkränze abgestimmt sein kann, kann hier eine gleichmäßige Gewichtsverteilung bewirkt werden und so auch eine gleichmäßige Druckverteilung für die auf dem Scheitelbereich des Rohres 3 geführten Laufrollen erzielt werden.

## Patentansprüche

1. Vorrichtung zum Umwickeln eines Rohres (3), insbesondere eines Rohrstranges, mit Korrosionsschutzband (19), die ein Fahrwerk (1) aufweist, das mit antreibbaren Laufrollen (2, 4) versehen und auf dem Rohr (3) in Längsrichtung verfahrbar ist, und an dem ein das zu bewickelnde Rohr (3) umfassender Drehkranz (13) antreibbar gelagert ist, der mit wenigstens einer, mit einer Bandspule versehenen Abspulvorrichtung (18) verbunden ist.

2. Vorrichtung nach Anspruch 1, dadurch gekennnzeichnet, daß Laufrollen (2) zur Abstützung des Fahrwerks (1) auf dem Scheitelbereich des Rohres (3) angeordnet sind.

3. Vorrichtung nach Anspruch 1 oder 2, dadurch gekennzeichnet, daß Laufrollen (4) seitlich am Rohr (3) anliegend am Fahrwerk (1) angeordnet sind.

4. Vorrichtung nach einem der Ansprüche 1 bis 3, dadurch gekennzeichnet, daß das Fahrwerk (1) mit einem Antriebsmotor (10) versehen ist, über den Laufrollen (2) des Fahrwerks (1) und der Drehkranz (13) in einem vorgebbaren Verhältnis von Fahrgeschwindigkeit des Fahrwerks (1) zur Drehzahl des Drehkranzes (13) antreibbar sind.

5. Vorrichtung nach einem der Ansprüche 1 bis 4, dadurch gekennzeichnet, daß die dem Scheitelbereich des zu bewickelnden Rohres (3) zugeordneten Laufrollen (2) mit dem Antriebsmotor (10) in Wirkverbindung stehen.

6. Vorrichtung nach einem der Ansprüche 1 bis 5, dadurch gekennzeichnet, daß die dem Scheitelbereich des zu bewickelnden Rohres (3) zugeordneten Laufrollen (2) im Abstand zum Fahrwerk (1) höhenverstellbar mit dem Fahrwerk (1) verbunden sind.

7. Vorrichtung nach einem der Ansprüche 1 bis 6, dadurch gekennzeichnet, daß der Drehkranz (13) teilbar ausgebildet ist.

8. Vorrichtung nach einem der Ansprüche 1 bis 7, dadurch gekennzeichnet, daß der Drehkranz (13) über Stützrollen (12) am Fahrwerk (1) drehbar gelagert ist.

9. Vorrichtung nach einem der Ansprüche 1 bis 8, dadurch gekennzeichnet, daß der Drehkranz (13) als Zahnkranz ausgebildet ist und daß die Verzahnung (14) des Drehkranze4s (13) über ein Antriebsritzel (15) mit dem Antriebsmotor (10) in Verbindung steht.

10. Vorrichtung nach einem der Ansprüche 1 bis 9, dadurch gekennzeichnet, daß das Fahrwerk (1) mit einer seitlich abstehenden Führdeichsel (30) versehen ist, an der die Betätigungseinrichtungen (31, 32, 33) zur Steuerung der Fahrfunktionen angeordnet sind.

11. Vorrichtung nach einem der Ansprüche 1 bis 10, dadurch gekennzeichnet, daß am Fahrwerk (1) an dem dem Drehkranz (13) abgekehrten Ende ein Gegengewicht (34) angeordnet ist.
